# EUROPÄISCHE PATENTSCHRIFT

(11) **EP 0 460 376 B1**
(45) Veröffentlichungstag und Bekanntmachung des Hinweises auf die Patenterteilung: **07.09.1994**
(21) Anmeldenummer: 91105535.8
(22) Anmeldetag: 08.04.1991
(51) Int. Cl.: B60T 17/22, F16D 66/02, F16D 65/60

(54) **Bremsbetätigungseinrichtung mit einer Einrichtung zum Nachstellen einer Bremse**
Brake actuating device with brake adjusting means
Dispositif de commande de frein à dispositif pour ajuster un frein

(30) Priorität: 05.06.1990 DE 4017950
(43) Veröffentlichungstag der Anmeldung: 11.12.1991
(73) Patentinhaber: WABCO GmbH, 30453 Hannover (DE)
(72) Erfinder: Feldmann, Joachim, W-3057 Neustadt 2 (DE)
(74) Vertreter: Schrödter, Manfred, Dipl.-Ing.

(56) Entgegenhaltungen:
- EP-A- 0 030 766
- EP-A- 0 370 173
- DE-A- 1 600 223
- DE-A- 3 343 885
- DE-B- 1 480 038
- DE-B- 2 116 121

## Beschreibung

Die Erfindung betrifft eine Bremsbetätigungseinrichtung mit einer Einrichtung zum Nachstellen einer Bremse, insbesondere einer Fahrzeugbremse, gemäß dem Oberbegriff des Patentanspruchs 1.

Eine derartige Einrichtung ist durch die DE-PS 1 480 038 vorbekannt. Die vorbekannte Einrichtung weist eine Nachstelleinrichtung auf, mit der Teile eines Bremsgestänges, nämlich eine Bremswelle und ein darauf angeordneter Bremshebel gegeneinander verstellbar sind. Die Verstellung dient einer kontinuierlichen Nachjustierung des Bremsgestänges im Sinne einer Aufrechterhaltung eines vorgegebenen Bremslüftspiels. Diese Nachjustierung soll ein gleichbleibendes Ansprechverhalten der Bremsen bzw. Bremsverhalten gewährleisten, was nicht zuletzt aus Gründen der Fahrsicherheit Gegenstand entsprechender gesetzlicher Regelungen ist.

Verschleiß oder Defekte der Nachstelleinrichtung und deren Betätigungsmechanismus können jedoch ein fehlerhaftes Nachjustieren bewirken, mit der Folge, daß das durch den Bremsentyp vorgegebene Bremslüftspiel im Verlaufe des Fahrbetriebes nicht mehr aufrecht erhalten bleibt und dann nicht mehr dem tatsächlichen Bremsbelagverschleiß entspricht. Bei der vorbekannten Einrichtung ist eine fehlerhafte Nachjustierung, oder das gänzliche Ausbleiben einer solchen, nur durch einen sich verändernden Bremsbetätigungshub oder ein Nachlassen der Bremswirkung erkennbar. Diese unerwünschte Veränderung des Bremslüftspiels vollzieht sich jedoch nur allmählich und gewöhnlich über einen längeren Zeitabschnitt und ist daher anfänglich kaum wahrnehmbar. Aus Sicherheitsgründen besteht daher das Bedürfnis, dem Betreiber die Gewißheit über den tatsächlichen Zustand des Bremslüftspiels und des Verschleißes des Bremsbelages zu erhalten.

Der Erfindung liegt die Aufgabe zugrunde, eine Bremsbetätigungseinrichtung der eingangs erwähnten Art mit einfachen Mitteln so zu verbessern, daß der dem Bremslüftspiel entsprechende Betätigungshub des Bremsgestänges und der Verschleiß des Bremsbelages kontinuierlich erfaßbar ist.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung läßt sich kostengünstig unter Verwendung eines handelsüblichen fühlergesteuerten Wegsensors, wie er beispielsweise in der DE 33 43 885 A1 beschrieben ist, ausführen.

Die Erfindung eröffnet die Möglichkeit, den Zustand bzw. das Betriebsverhalten der Bremseinrichtung in ein elektronisches Diagnosesystem, sei es werkstattgebunden, sei es im Falle eines Fahrzeugs bordeigen, einzubeziehen.

Die Erfindung läßt sich mit jedem geeigneten Bremshebel, unabhängig von der Art des auf ihn wirkenden Betätigungsmechanismus, ausführen. Nur beispielhaft seinen hierfür mit Druckluft oder Bremsflüssigkeit betätigbare Bremszylinder genannt.

Die Erfindung erhöht die aktive Sicherheit der Bremsanlage, was insbesondere bei Fahrzeugen vorteilhaft ist. Dies gilt insbesondere, wenn die Nachstelleinrichtung im Bremshebel angeordnet ist und daher ihre visuelle Überwachung kaum möglich ist.

Ein weiterer Vorteil der Erfindung besteht in ihrer weiteren Ausbildung durch eine Verbindung der Überwachungseinrichtung mit Funktionselementen des Bremshebels und einer dadurch erreichten Kapselung gegen am Fahrzeug herrschende Umwelteinflüsse.

Weitere Vorteile der Erfindung werden in der nachstehenden Erläuterung anhand eines in der Zeichnung dargestellten Ausführungsbeispiels beschrieben.

Die Erfindung wird anhand eines Ausführungsbeispiels, das in der Zeichnung dargestellt ist, näher erläutert.

Es zeigen.
- **Fig.1**: eine Bremsbetätigungseinrichtung mit Einrichtungen zur Überwachung des Bremsbetätigungshubes und des Bremsbelagverschleißes,
- **Fig.2**: eine Einzelheit der Überwachungs-Einrichtung gemäß Fig.1,
- **Fig.3**: Meßgrößen der Überwachungseinrichtung gemäß Fig.1.

Die dargestellte Einrichtung ist dafür vorgesehen, die Funktion der Nachstelleinrichtung zwecks Aufrechterhaltung eines annähernd konstanten Bremslüftspiels sowie den Bremsbelagverschleiß zu überwachen.

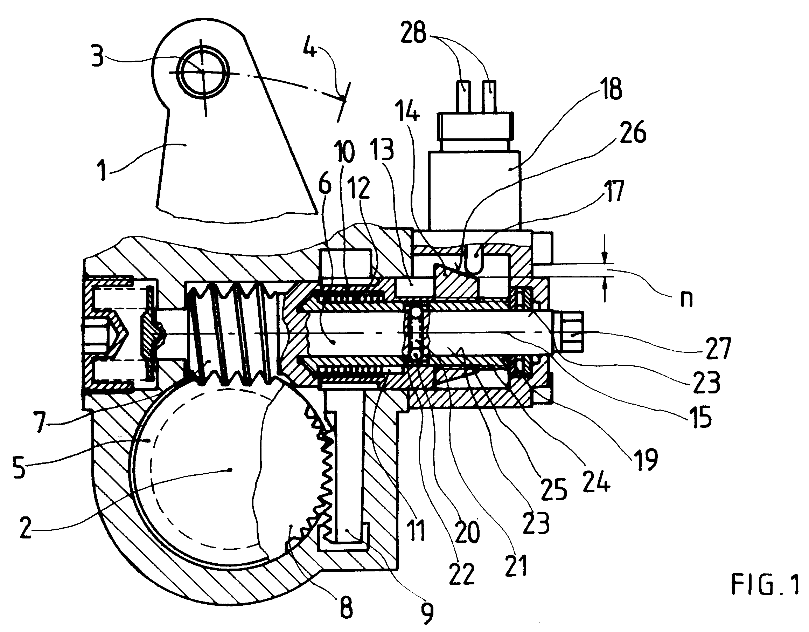

Die Bremsbetätigungseinrichtung umfaßt gemäß Fig.1 einen Bremshebel (1), der auf einer Bremsbetätigungswelle (2) angeordnet ist, sowie ein nicht dargestelltes Betätigungsorgan, wie z.B. einen durch ein Druckmittel betätigbaren Bremszylinder, mit dem der Bremshebel (1) mit der Bremsbetätigungswelle (2) um die Drehachse der Bremsbetätigungswelle (2) verschwenkbar ist. Der bei der Verschwenkung vom Bremshebel (1) durchfahrene Bremshebelausschlag zwischen einer vorgegebenen Anfangsstellung (3) und einer Endstellung (4) entspricht dem Durchfahren eines Lüftspiels der Bremselemente, wie z.B. Bremsbacken und Bremstrommel, bis zu deren Eingriff bei einer Bremsbetätigung.

Zwischen der Bremsbetätigungswelle (2) und dem Bremshebel (1) ist eine Nachstelleinrichtung (5, 7) in Form eines Getriebes mit einem Schneckenrad (5) und einer Schnecke (7) angeordnet. Um bei einem Verschleiß der Bremselemente dennoch ein vorgegebenes Bremslüftspiel aufrechtzuerhalten, ist die Bremsbetätigungswelle (2) gegenüber dem Bremshebel (1), dem Verschleiß entsprechend, durch die Nachstelleinrichtung (5, 7) verstellbar. Diese Verstellung bewirkt, daß der maximale Bremshebelausschlag bei einer Bremsbetätigung zwischen der Anfangsstellung (3) und der Endstellung (4) nahezu unverändert bleibt. Eine Abweichung hiervon in vorgegebenen Grenzen soll letztlich nur durch eine unterschiedliche Erwärmung der Bremstrommel gegeben sein.

Die Nachstelleinrichtung (5, 7) ist durch einen Antrieb (8, 9, 10) betätigbar, der aus einem um die Bremsbetätigungswelle (2) und relativ zum Bremshebel (1) drehbar angeordneten Zahnrad (8), einer mit dem Zahnrad (8) in Eingriff befindlichen Zahnstange (9) und einem mit der Zahnstange (9) in Eingriff befindlichen Ritzel (10) gebildet ist. Zwischen dem Antrieb (8, 9, 10) und der Nachstelleinrichtung (5, 7) ist eine durch Anschläge (11) begrenzte Leerwegeinrichtung und eine Einwegkupplung (12) nach Art eines Freilaufs angeordnet.

Das Zahnrad (8) ist mit einem relativ zum Bremshebel (1) angeordneten Bezugspunkt verbunden, derart, daß bei einem Bremshebelausschlag durch eine Relativbewegung des Bremshebels (1) zum Zahnrad (8) die Zahnstange (9) und das Ritzel (10) in eine Antriebsbewegung relativ zu der Nachstelleinrichtung (5, 7) versetzt werden, wobei jedoch bei einer Drehbewegung des Ritzels (10) innerhalb der Anschläge (11) der Leerwegeinrichtung die Antriebsbewegung nicht über die Einwegkupplung (12) auf die Nachstelleinrichtung (5, 7) übertragen wird. Die Antriebsbewegung von Zahnstange (9) und Ritzel (10), bei der sich das Ritzel (10) zwischen den Anschlägen (11) der Leerwegeinrichtung bewegt, entspricht dem Bremshebelausschlag zwischen der Anfangsstellung (3) und der Endstellung (4), der einem vorgegebenen Bremslüftspiel zwischen den Bremsbacken und der Bremstrommel entsprechen soll.

Ein Bremshebel mit einer automatischen Nachstellung der Bremsbetätigungswelle, ähnlich dem der vorstehend beschriebenen Einrichtung, ist auch durch die EP 0 030 766 A1 bekannt. Anstelle der Zahnstange (9) und dem Ritzel (10) ist hier der Antrieb der Nachstelleinrichtung durch ein Zahnrad, eine mit dem Zahnrad drehfest verbundenen Schnecke und ein von der Schnecke antreibbares Schneckenrad gebildet. Dieser Antrieb der Nachstelleinrichtung wird ebenfalls bei einem Bremshebelausschlag stets zwischen Endanschlägen einer Leerwegeinrichtung in zwei Richtungen bewegt.

Bei einem Defekt der vorstehend beschriebenen Nachstelleinrichtungen, d.h., wenn der durch den Fahrbetrieb auftretende Verschleiß der Bremselemente nicht durch ein Verstellen der Bremsbetätigungswelle (2) relativ zum Bremshebel (1) kompensiert wird, stellt sich bei Bremsbetätigungen ein Bremshebelausschlag ein, der die Endstellung (4) überschreitet.

Die Fig.1 zeigt die Bremsbetätigungseinrichtung mit dem Bremshebel (1) in Kombination mit einer Einrichtung zur Überwachung des Bremshebelausschlages und des Bremsbelagverschleißes.

Das Ritzel (10) ist über eine Steckverbindung (13) in der Art einer Klauenkupplung mit einem Stellglied (14) drehfest verbunden. Das Stellglied (14) folgt somit der vor- und rückläufigen Drehbewegung des Ritzels (10) bei Bremshebelausschlägen.

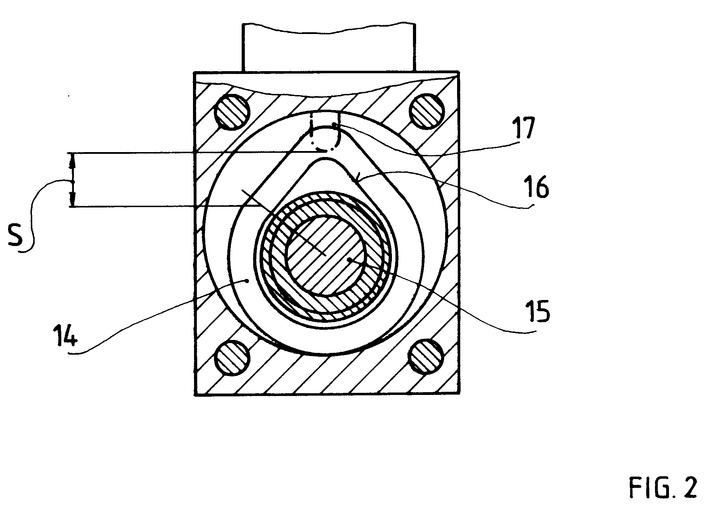

Das Stellglied (14) weist eine exentrisch zur Drehachse (15) der Schnecke (7) angeordnete Steuerkurve (16) auf, die zur Erzeugung eines ersten Meßweges (S) um die Drehachse (15) der Schnecke (7) und bezüglich eines Wegsensors (17) eines Signalgebers (18) verschwenkbar ist. Mit der Schwenkbewegung der Steuerkurve (16), entsprechend der Bewegung des Ritzels (10) wird der dem Bremslüftspiel entsprechende Meßweg (s) erzeugt, der von dem Wegsensor (17) abgetastet und durch dessen Längsbewegung dem Signalgeber (18) mitgeteilt wird. (Fig.2)

Bei einem Defekt der Bremsbetätigungseinrichtung, wie z.B. einem nicht exakten Funktionieren der Nachstelleinrichtung (5, 7), der einen über die Endstellung (4) hinausragenden Bremshebelausschlag zur Folge hat, wird die Steuerkurve (16) relativ zum vergrößerten Bremshebelausschlag über ihre durch die Endstellung (4) des Bremshebels (1) vorgegebene Endstellung hinaus bewegt. Der Wegsensor (17) wird dann durch die Steuerkurve (16) in eine dem vergrößerten Bremshebelausschlag entsprechende Position relativ zum Signalgeber (18) bewegt.

Die Schnecke (7) weist einen Fortsatz (6) auf. Auf dem Fortsatz (6) ist eine Buchse (19) gelagert, die mit dem Fortsatz (6) drehfest verbunden ist. Die drehfeste Verbindung erfolgt über ein zwischen dem Fortsatz (6) und der Buchse (19) wirksames Gesperre (20), das z.B. in der Art eines mittels einer Feder (21) vorgespannten Kugelgesperres (20) mit Rasten (22) ausgebildet ist, die in beliebiger Anzahl am Innendurchmesser (23) der Buchse (19) angeordnet sind.

Die Buchse (19) ist mit einem Außengewinde (24) versehen, das in Wirkverbindung mit einem Innengewinde (25) des Stellgliedes (14) steht, Die Gewindeverbindung (24, 25) wirkt als Übertragungsmechanismus (24, 25) mit dem das Stellglied (14) entsprechend einer Drehbewegung der Schnecke (7), im Sinne einer Verstellbewegung der Nachstelleinrichtung (5, 7) bezüglich der Drehachse (15) der Schnecke (7) längsverschieblich ist.

Das Stellglied (14) weist zu der Drehachse (15) der Schnecke (7), die zugleich die Verschiebeachse (15) des Stellgliedes (14) ist, eine als Steuerkurve (26) dienende geneigte Fläche (26) auf, die zur Erzeugung eines zweiten Meßweges (n) bezüglich der Drehachse (15) und des Wegsensors (17) längsverschieblich ist. Der Wegsensor (17) befindet sich mit der Steuerkurve (26) im Eingriff, so daß entsprechend des erzeugten zweiten Meßweges (n) der Wegsensor(17) relativ zu dem Signalgeber (18) bewegt wird.

Der Fortsatz (6) weist an seinem freien Ende eine Formgebung (27) auf, die zum Ansatz eines Schlüssels dient, mit der die Nachstelleinrichtung (5, 7) manuell verstellbar ist. Das Gesperre (20) dient in beiden Verstellrichtungen als Bruchsicherung, wenn das Stellglied (14) durch Verstellung in seinen Endstellungen zur Anlage gekommen ist. Durch Überwinden des Gesperres (20) führt der Fortsatz (6) gegenüber der Buchse (19) und dem Stellglied (14) eine Relativbewegung aus.

Durch manuelle Verstellung der Nachstelleinrichtung (5, 7) wird der Bremshebel (1) in eine Ausgangsstellung (3) gebracht, in der bei vorgegebenem Bremslüftspiel die Steuerkurve (26) sich bezüglich des Wegsensors (17) am Beginn des Meßweges (n) befindet. Im Verlaufe des Fahrbetriebes wird die durch Verschleiß des Bremsbelages erfolgende erweiterte Verschwenkung des Bremshebels (1) in der zuvor beschriebenen Weise zur Verstellung der Nachstelleinrichtung (5, 7) genutzt. Die Verstellung der Nachstelleinrichtung (5, 7) wiederum bewirkt eine Relativbewegung der Steuerkurve (26) gegenüber dem Wegsensor (17).

Mit dem Bremshebel (1) fest verbunden ist die Einrichtung zur Überwachung des Bremshebelausschlages und des Bremsbelagverschleißes in der Art des Signalgebers (18) angeordnet, der sich in an sich bekannter Weise elektrisch, mit Spule und Kern, ausgebildet ist. Der Kern der Spule ist durch einen Wegsensor (17) in der Art eines Taststiftes (17) gebildet, der mit den Steuerkurven (16) und (26) in der beschriebenen Weise im Eingriff befindlich ist. Die mittels des Signalgebers (18) erzeugbaren elektrischen Signale sind über elektrische Kontakte (28) einer Anzeige- bzw. Auswerteeinrichtung zuführbar. Sie können zur Steuerung einer optischen oder akustischen Anzeigeeinrichtung im Fahrerhaus, oder zur Weiterleitung an eine elektrische Auswerteeinrichtung eines stationären Diagnosecenters, z.B. anläßlich einer Fahrzeuginspektion, vorteilhaft genutzt werden.

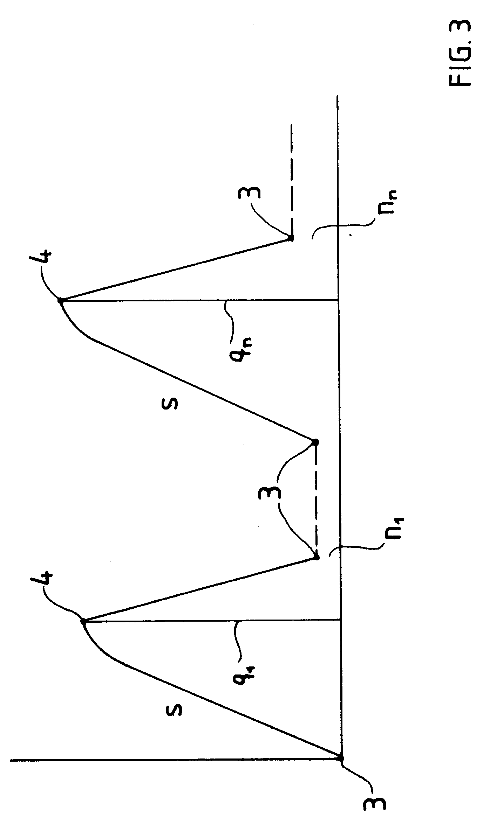

Die Fig. 3 zeigt Charakteristiken von Meßgrößen entsprechend der Meßwege (s) und (n₁, nₙ). Die einem Bremshebelausschlag von der Ausgangsstellung (3) in die Endstellung (4) bei einer Bremsbetätigung zugeordnete Kennlinie (s) bleibt bei einer intakten Einrichtung konstant. Der der Bremsnachstellung entsprechende Meßweg (n₁, nₙ) vergrößert sich mit fortschreitender Nachstellung. Der Beginn des Meßweges (s) verlagert sich demzufolge um den Anteil des Meßweges (n₁, nₙ).

Der Wegsensor (17) tastet einen mit dem Stellglied (14) erzeugten Stellweg (q₁, qₙ) ab, der durch Überlagerung der Meßwege (s) und (n₁, nₙ) entsteht. Die Auswerteeinrichtung erkennt die unterschiedlichen Charakteristiken der den Meßwegen (s) und (n₁, nₙ) zugeordneten Signale (s') und (n'₁, n'ₙ) und kann z.B. durch Unterdrückung des konstanten Signals (s') das Signal (n'₁, nₙ) herausfiltern.

Bei einem konstanten Signal (s') und einer stetigen Änderung des Signals (n'₁, n'ₙ) kann auf eine intakte Brems- und Überwachungseinrichtung geschlossen werden. Ein gleichbleibendes Signal (n'₁, n'ₙ) und eine Änderung des Signals (s') gibt z.B. Aufschluß über ein nicht einwandfreies Funktionieren der Nachstellung des Bremsbelagverschleißes.

Die Erfassung des Meßweges (n₁, nₙ) ist z.B. auch dann möglich, wenn dem Signal des Stellweges (q₁, qₙ) ein Erkennungssignal beigefügt würde, an dem die Auswerteeinrichtung die nichtbetätigte Ausgangsstellung (3) des Bremshebels (1) erkennt. Der Stellweg (q₁, qₙ) entspräche bei Vorliegen eines solchen Erkennungssignals dem von der Kurve (26) erzeugten Meßweg (n₁, nₙ). Das Erkennungssignal könnte z.B. mit einem Schalter erzeugt werden, der an beliebiger Stelle des betätigbaren Teils der Bremseinrichtung zu installieren wäre.

## Patentansprüche

1. Bremsbetätigungseinrichtung mit einer Einrichtung zum Nachstellen einer Bremse, insbesondere einer Fahrzeugbremse, mit folgenden Merkmalen:
a) es ist ein Bremshebel (1) vorgesehen, der zusammen mit einer Bremswelle (2) um deren Drehachse eine Schwenkbewegung ausführt, die zur Betätigung einer Bremse, im Sinne des Überwindens eines Bremslüftspiels zwecks Annäherung eines Bremsbelages an eine Bremstrommel, dient;
b) zwischen dem Bremshebel (1) und der Bremswelle (2) ist eine Nachstelleinrichtung (5, 7) vorgesehen, mit der die Bremswelle gegenüber dem Bremshebel um die Drehachse der Bremswelle, im Sinne der Aufrechterhaltung des Bremslüftspiels bei Verschleiß des Bremsbelages, verstellbar ist,
c) die Nachstelleinrichtung (5, 7) ist in der Art eines Getriebes, mit einem auf der Bremswelle (2) drehfest angeordneten Schneckenrad (5) und einer mit diesem in Eingriff befindlichen Schnecke (7), ausgebildet;
gekennzeichnet durch die folgenden Merkmale:
d) es ist ein Stellglied (14) vorgesehen, das zur Erzeugung eines dem Überwinden des Bremslüftspiels entsprechenden ersten Meßweges (s) in Abhängigkeit von der Schwenkbewegung des Bremshebels (1) betätigbar ist;
e) das Stellglied (14) ist ferner zur Erzeugung eines dem Bremsbelagverschleiß entsprechenden zweiten Meßweges (n) in Abhängigkeit von der Verstellbewegung der Nachstelleinrichtung (5, 7) betätigbar;
f) mit dem Stellglied (14) ist ein Stellweg (q) erzeugbar, der aus einer Überlagerung des ersten Meßweges (s) und des zweiten Meßweges (n) gebildet ist;
g) es ist ein mit einem Wegsensor (17) versehener Signalgeber (18) vorgesehen, der zum Abtasten des Stellweges (q) dient und ein dem Stellweg (q) entsprechendes Signal erzeugt;
h) es ist eine Auswerteeinrichtung vorgesehen, mit der durch Vergleich der Charakteristiken der Meßwege (s) und (n) das dem Stellweg (q) entsprechende Signal in ein dem ersten Meßweg (s) entsprechendes erstes Signal (s') und ein dem zweiten Meßweg (n) entsprechendes zweites Signal (n') zerlegbar ist.

2. Einrichtung nach Anspruch 1, gekennzeichnet durch die folgenden Merkmale:
a) das Stellglied (14) weist eine exentrisch zur Drehachse (15) der der Nachstelleinrichtung (5, 7) zugeordneten Schnecke (7) angeordnete Steuerkurve (16) auf, die zur Erzeugung des ersten Meßweges (s) um die Drehachse (15) der Schnecke (7) und bezüglich des Wegsensors (17) verschwenkbar ist;
b) das Stellglied (14) weist eine zur Drehachse (15) der Schnecke (7) geneigte Fläche (26) auf, die zur Erzeugung des zweiten Meßweges (n) bezüglich der Drehachse (15) der Schnecke (7) und des Wegsensors (17) längsverschieblich ist.

3. Einrichtung nach Anspruch 1, mit folgenden Merkmalen:
a) es ist eine selbsttätige Nachstelleinrichtung (5, 7) vorgesehen, mit einem Antrieb (8, 9, 10), der zur Betätigung der Nachstelleinrichtung (5, 7) dient;
b) der Antrieb (8, 9, 10) führt in Abhängigkeit von der Schwenkbewegung des Bremshebels zu diesem eine Relativbewegung aus,
gekennzeichnet durch folgendes Merkmal:
c) der Antrieb (8, 9, 10) weist ein mit der Schwenkbewegung des Bremshebels (1) drehbares Ritzel (10) auf, dessen Drehbewegung, zur Erzeugung des ersten Meßweges (s), auf das Stellglied (14) übertragbar ist.

4. Einrichtung nach Anspruch 3, dadurch gekennzeichnet, daß das Ritzel (10) in dem Bremshebel (1) angeordnet und mit dem Stellglied (14) drehfest verbunden ist.

5. Einrichtung nach den Ansprüchen 1 und 2, dadurch gekennzeichnet, daß der zweite Meßweg (n) in Abhängigkeit von der Verstellbewegung der der Nachstelleinrichtung (5, 7) zugeordneten Schnecke (7) erzeugbar ist.

6. Einrichtung nach Anspruch 5, gekennzeichnet durch die folgenden Merkmale:
a) die Schnecke (7) ist in dem Bremshebel (1) angeordnet und weist einen einstückig oder drehfest mit der Schnecke (7) verbundenen Fortsatz (6) auf, der sich außerhalb des Bremshebels (1) erstreckt;
b) zwischen dem Fortsatz (6) und dem Stellglied (14) ist ein Übertragungsmechanismus (24, 25) zur Umwandlung der Verstellbewegung der Schnecke (7) in eine Bewegung des Stellgliedes (14) längs zu dessen Verschiebeachse (15) vorgesehen.

7. Einrichtung nach Anspruch 6, dadurch gekennzeichnet, daß der Übertragungsmechanismus (24, 25) aus einem Innengewinde (25) des Stellgliedes (14) gebildet ist, das mit einem mit dem Fortsatz (6) drehfest verbundenen Außengewinde (24) im Eingriff befindlich ist.

8. Einrichtung nach Anspruch 7, dadurch gekennzeichnet, daß das dem Fortsatz (6) zugeordnete Außengewinde (24) auf einer dem Fortsatz (6) umgreifenden und mit diesem drehfest verbundenen Buchse (19) angeordnet ist.

9. Einrichtung nach Anspruch 8, dadurch gekennzeichnet, daß ein zwischen der Buchse (19) und dem Fortsatz (6) wirksames Rastgesperre (20) vorgesehen ist, mit dem die Buchse (19) und der Fortsatz (6) in beliebige Raststellungen zueinander bringbar sind.

10. Einrichtung nach Anspruch 1, dadurch gekennzeichnet, daß der Wegsensor (17) des Signalgebers (18) als Taststift (17) ausgebildet ist, der sich zur Erzeugung des Stellweges (q) mit dem Stellglied (14) im Eingriff befindet.

11. Einrichtung nach Anspruch 4, dadurch gekennzeichnet, daß die drehfeste Verbindung des Ritzels (10) mit dem Stellglied (14) aus einer Steckverbindung (13) gebildet ist, die eine Längsverschieblichkeit des Stellgliedes (14) bezüglich seiner Verschiebeachse (15) ermöglicht.

12. Einrichtung nach Anspruch 1, dadurch gekennzeichnet, daß ein dem nichtbetätigten Zustand der Bremseinrichtung entsprechendes Signal der Auswerteeinrichtung zuführbar ist und dort der Erkennung des Meßweges (n) dient.

## Claims

1. Brake actuating device with a device for adjusting a brake, especially a vehicle brake, having the following features:
a) a brake lever (1) is provided which together with a brake shaft (2) executes a pivoting movement about the rotation axis which serves for the actuation of a brake by closing a brake air gap in order to bring a brake lining close to a brake drum;
b) between the brake lever (1) and the brake shaft (2) an adjusting device (5, 7) is provided, by which the brake shaft can be displaced with respect to the brake lever about the rotation axis of the brake shaft, so as to maintain the brake air gap as the brake lining wears;
c) the adjusting device (5, 7) is in the form of gearing, with a wormwheel (5) non-rotatably arranged on the brake shaft (2) and a worm (7) engaged with the wormwheel;
characterised by the following features:
d) an adjusting member (14) is provided which is able to be actuated in order to produce a first measuring travel (s) corresponding to the closing of the brake air gap, in response to the pivoting movement of the brake lever (1);
e) the adjusting member (14) is moreover able to be actuated in order to produce a second measuring travel (n) corresponding to the brake lining wear, in response to the displacement movement of the adjusting device (5, 7);
f) with the adjusting member (14) an adjustment travel (q) is able to be produced which is formed by superposition of the first measuring travel (s) and the second measuring travel (n);
g) a signal generator (18) equipped with a travel sensor (17) is provided which serves to sense the adjustment travel (q) and produces a signal corresponding to the adjustment travel (q);
h) an evaluating device is provided, with which by comparison of the characteristics of the measuring travels (s) and (n) the signal corresponding to the adjustment travel (q) is able to be split up into a first signal (s') corresponding to the first measuring travel (s) and a second signal (n') corresponding to the second measuring travel (n).

2. Device according to Claim 1, characterised by the following features:
a) the adjusting member (14) has a control cam (16) which is arranged eccentrically with respect to the rotation axis (15) of the worm (7) associated with the adjusting device (5, 7), and which in order to produce the first measuring travel (s) is pivotable about the rotation axis (15) of the worm (7) and with respect to the travel sensor (17);
b) the adjusting member (14) has a surface (26) which is inclined with respect to the rotation axis (15) of the worm (7) and which in order to produce the second measuring travel (n) is longitudinally displaceable with respect to the rotation axis (15) of the worm (7) and of the travel sensor (17).

3. Device according to Claim 1, having the following features:
a) an automatic adjusting device (5, 7) is provided, with a drive (8, 9, 10) which serves to actuate the adjusting device (5, 7);
b) the drive (8, 9, 10), in response to the pivoting movement of the brake lever, executes a movement relative to the latter,
characterised by the following feature:
c) the drive (8, 9, 10) has a pinion (10) which is rotatable by the pivoting movement of the brake lever (1) and the rotational movement of which, in order to produce the first measuring travel (s), is able to be transmitted to the adjusting member (14).

4. Device according to Claim 3, characterised in that the pinion (10) is arranged in the brake lever (1) and is non-rotatably coupled to the adjusting member (14).

5. Device according to Claims 1 and 2, characterised in that the second measuring travel (n) is able to be produced in response to the displacement movement of the worm (7) associated with the adjusting device (5, 7).

6. Device according to Claim 5, characterised by the following features:
a) the worm (7) is arranged in the brake lever (1) and has an extension (6) which is integral with or non-rotatably connected to the worm (7) and which extends outside the brake lever (1);
b) between the extension (6) and the adjusting member (14) there is provided a transmission mechanism (24, 25) to convert the displacement movement of the worm (7) into a movement of the adjusting member (14) longitudinally of the displacement axis (15) of the latter.

7. Device according to Claim 6, characterised in that the transmission mechanism (24, 25) is formed of an internal screw thread (25) of the adjusting member (14), engaged with an external screw thread (24) non-rotatably coupled to the extension (6).

8. Device according to Claim 7, characterised in that the external screw thread (24) associated with the extension (6) is arranged on a bush (19) fitting round the extension (6) and non-rotatably coupled to the latter.

9. Device according to Claim 8, characterised in that a locking mechanism (20) taking effect between the bush (19) and the extension (6) is provided, with which the bush (19) and the extension (6) are able to be brought into any required locking position relative to one another.

10. Device according to Claim 1, characterised in that the travel sensor (17) of the signal generator (18) is in the form of a feeler pin (17) which in order to produce the adjustment travel (q) is engaged with the adjusting member (14).

11. Device according to Claim 4, characterised in that the non-rotatable coupling of the pinion (10) to the adjusting member (14) is formed by a push-in connection (13) which permits longitudinal displacement of the adjusting member (14) with respect to its displacement axis (15).

12. Device according to Claim 1, characterised in that a signal corresponding to the unactuated state of the braking device is able to be fed to the evaluating device and there serves for identification of the measuring travel (n).

## Revendications

1. Dispositif de commande de frein avec un dispositif pour ajuster un frein, en particulier un frein de véhicule, avec les caractéristiques suivantes :
a) il est prévu un levier de frein (1) qui effectue, ensemble avec un arbre de frein (2) autour de son axe de rotation, un mouvement de pivotement qui sert à l'actionnement d'un frein, dans le sens de l'annulation d'un jeu des freins afin d'approcher une garniture de frein contre un tambour de frein;
b) entre le levier de frein (1) et l'arbre de frein (2) est prévu un dispositif d'ajustement (5, 7) grâce auquel l'arbre de frein peut être réglé par rapport au levier de frein autour de l'axe de rotation de l'arbre de frein, dans le sens d'une maintenance du jeu des freins lors de l'usure de la garniture de frein,
c) le dispositif d'ajustement (5, 7) est formé à la manière d'une transmission, avec une roue tangente (5) agencée solidairement en rotation sur l'arbre de frein (2) et avec une vis tangente (7) en engrènement avec la roue tangente (5);
caractérisé par les éléments suivants :
d) il est prévu un organe de réglage (14) qui peut être actionné pour la production d'une première course de mesure (s) correspondant à l'annulation du jeu des freins en dépendance du mouvement de pivotement du levier de frein (1);
e) l'organe de réglage (14) peut en outre être actionné pour la production d'une seconde course de mesure (n) correspondant à l'usure de la garniture de frein en dépendance du mouvement de réglage du dispositif d'ajustement (5, 7);
f) à l'aide de l'organe de réglage (14) on peut produire une course de réglage (q), qui est formée par une superposition de la première course de mesure (s) et de la seconde course de mesure (n);
g) il est prévu un capteur de signal (18) pourvu d'un détecteur de course (17), ce capteur de signal servant à la détection de la course de réglage (q) et produisant un signal correspondant à la course de réglage (q);
h) il est prévu un dispositif d'évaluation grâce auquel, en comparant les caractéristiques des courses de mesure (s) et (n), le signal qui correspond à la course de réglage (q) peut être décomposé en un premier signal (s') correspondant à la première course de mesure (s) et en un second signal (n') correspondant à la seconde course de mesure (n).

2. Dispositif selon la revendication 1, caractérisé en ce que
a) l'organe de réglage (14) présente une came de commande (16) agencée excentriquement par rapport à l'axe de rotation (15) de la vis tangente (7) associée au dispositif d'ajustement (5, 7), came de commande qui peut être pivotée autour de l'axe de rotation (15) de la vis tangente (7) et par rapport au détecteur de course (17) pour la production de la première course de mesure (s);
b) l'organe de réglage (14) présente une surface (26) penchée vers l'axe de rotation (15) de la vis tangente (7), surface qui peut être déplacée dans la direction longitudinale par rapport à l'axe de rotation (15) de la vis tangente (7) et par rapport au détecteur de course (17) pour la production de la seconde course de mesure (n).

3. Dispositif selon la revendication 1, caractérisé en ce que
a) il est prévu un dispositif d'ajustement (5, 7) automatique, avec un entraînement (8, 9, 10) qui sert à l'actionnement du dispositif d'ajustement (5, 7);
b) l'entraînement (8, 9, 10) effectue un mouvement relatif par rapport au levier de frein en dépendance du mouvement de pivotement de celui-ci,
caractérisé en ce que
c) l'entraînement (8, 9, 10) comporte un pignon (10) capable de tourner avec le mouvement de pivotement du levier de frein (1), pignon dont le mouvement de rotation peut être transmis à l'organe de réglage (14) pour la production de la première course de mesure (s).

4. Dispositif selon la revendication 3, caractérisé en ce que le pignon (10) est agencé dans le levier de frein (1) et relié solidairement en rotation à l'organe de réglage (14).

5. Dispositif selon les revendications 1 et 2, caractérisé en ce que la seconde course de mesure (n) peut être produite en dépendance du mouvement de réglage de la vis tangente (7) associée au dispositif d'ajustement (5, 7).

6. Dispositif selon la revendication 5, caractérisé en ce que
a) la vis tangente (7) est agencée dans le levier de frein (1) et présente une prolongation (6) réalisée en une seule pièce avec la vis tangente (7) ou reliée solidairement en rotation à celle-ci, prolongation qui s'étend à l'extérieur du levier de frein (1);
b) entre la prolongation (6) et l'organe de réglage (14) est prévu un mécanisme de transmission (24, 25) pour la transformation du mouvement de réglage de la vis tangente (7) en un mouvement de l'organe de réglage (14) longitudinalement par rapport à son axe de déplacement (15).

7. Dispositif selon la revendication 6, caractérisé en ce que le mécanisme de transmission (24, 25) est formé d'un taraudage (25) de l'organe de réglage (14), qui se trouve en engagement avec un filetage (24) relié solidairement en rotation à la prolongation (6).

8. Dispositif selon la revendication 7, caractérisé en ce que le filetage (25) associé à la prolongation (6) est agencé sur une douille (19) qui entoure la prolongation (6) et qui est reliée solidairement en rotation à celle-ci.

9. Dispositif selon la revendication 8, caractérisé en ce qu'il est prévu un arrêt à encliquetage (20) agissant entre la douille (19) et la prolongation (6), avec lequel la douille (19) et la prolongation (6) peuvent être menées dans des positions d'arrêt quelconques l'une par rapport à l'autre.

10. Dispositif selon la revendication 1, caractérisé en ce que le détecteur de course (17) du capteur de signal (18) est réalisé en tant que tige de capteur (17), qui se trouve en engagement avec l'organe de réglage (14) pour la production de la course de réglage (q).

11. Dispositif selon la revendication 4, caractérisé en ce que la liaison solidaire en rotation entre le pignon (10) et l'organe de réglage (14) est formée d'une connexion enfichable (13), qui permet le déplacement longitudinal de l'organe de réglage (14) par rapport à son axe de déplacement (15).

12. Dispositif selon la revendication 1, caractérisé en ce qu'un signal correspondant à l'état non actionné du dispositif de frein peut être communiqué au dispositif d'évaluation et qui y sert à la reconnaissance de la course de mesure (n).
